# EUROPÄISCHE PATENTSCHRIFT

(11) **EP 2 420 344 B1**
(45) Veröffentlichungstag und Bekanntmachung des Hinweises auf die Patenterteilung: **22.05.2013**
(21) Anmeldenummer: 11176675.4
(22) Anmeldetag: 05.08.2011
(51) Int. Cl.: B23K 26/08, B23K 26/38, B23K 37/02, B23K 37/04, B26F 1/38, B23Q 39/02

(54) **Verfahren und Vorrichtung zum Herstellen eines Konturschnitts in einem Blechband**
Method of and device for producing a contour cut in a strip of sheet metal
Procédé et dispositif de découpe d'un contour dans une bande de tôle

(30) Priorität: 19.08.2010 DE 102010039538; 28.09.2010 DE 102010041542; 06.10.2010 DE 102010042067
(43) Veröffentlichungstag der Anmeldung: 22.02.2012
(73) Patentinhaber: Schuler Automation GmbH & Co. KG, 91093 Heßdorf (DE)
(72) Erfinder: Liebel, Martin, 91236 Alfeld (DE); Pohl, Dr. Thomas, 91091 Großenseebach (DE); Schreck, Jürgen, 91052 Erlangen (DE); Tolz, Michael, 91353 Hausen (DE)
(74) Vertreter: Gassner, Wolfgang

(56) Entgegenhaltungen:
- EP-A1- 2 145 744
- WO-A1-2009/105608
- DE-A1- 10 235 903
- DE-A1- 19 620 391
- US-A- 5 365 816

## Beschreibung

Die Erfindung betrifft ein Verfahren und eine Vorrichtung zum Herstellen eines Konturschnitts in einem mittels einer Fördervorrichtung in einer Transportrichtung transportierten Blechband.

Die WO 2009/105608 A1, die als nächstliegenden Stand der Technik angesehen wird, offenbart eine Vorrichtung zum Schneiden von Blech. Dabei überspannen mehrere in Transportrichtung nacheinander angeordnete Laserschneideinrichtungen ein mittels einer Transportvorrichtung darunter hindurchgeführtes Blechband. Jede der brückenartigen Laserschneideinrichtungen ist bezüglich der Transportrichtung über eine vorgegebene Strecke hin- und herbewegbar. Die bekannte Vorrichtung erfordert in Transportrichtung eine relativ große Baulänge. Abgesehen davon lassen sich mit der bekannten Vorrichtung nur relativ einfache Durchbruchsgeometrien aus einem Blechband herausschneiden.

Die DE 102 35 903 A1 offenbart eine Vorrichtung zur Herstellung eines Konturschnitts in einem Blech. Dabei wird ein Blechband mittels einer Transportvorrichtung in einer Transportrichtung transportiert. Seitlich des Blechbands befinden sich mehrere schwenkbare Laserschneidvorrichtung, mit denen aufeinanderfolgend der Konturschnitt im Blechband herstellbar ist. Auch diese Vorrichtung erfordert in Transportrichtung eine relativ große Baulänge. Die Bewegungen eines Laserkopfs der schwenkbaren Laserschneidvorrichtungen sind in ihrer Geschwindigkeit abhängig vom Schwenkwinkel und von der Entfernung zur Schwenkachse. Bei der Herstellung bestimmter Konturen ist eine extreme Beschleunigung des Laserschneidkopfs erforderlich. Derartige Beschleunigungen sind praktisch oft nicht durchführbar. Mit der bekannten Vorrichtung lassen sich nicht immer exakte Konturschnitte herstellen.

Die DE 10 2004 034 256 B4 offenbart eine Vorrichtung zum Schneiden von Blech. Dabei wird ein Blechband mittels einer Fördervorrichtung in einer Transportrichtung transportiert. Die Fördervorrichtung weist zwei in Transportrichtung aufeinanderfolgend angeordnete Transporteinrichtungen auf. Zwischen zwei einander gegenüberliegenden Enden der Transporteinrichtungen ist ein Durchbruch gebildet. Die einander gegenüberliegenden Enden der Transporteinrichtungen sind in oder gegen die Transportrichtung gleichsinnig bewegbar. Infolgedessen kann also der Durchbruch in oder auch entgegen der Transportrichtung verstellt werden. Oberhalb des Durchbruchs befindet sich eine Laserschneideinrichtung, deren Laserstrahl stets auf den Durchbruch gerichtet ist. Zur Herstellung eines beliebigen Schnitts in einem auf der Fördervorrichtung transportierten Blechband kann die Laserschneideinrichtung sowohl in einer der Transportrichtung entsprechenden X-Richtung als auch senkrecht dazu in einer Y-Rich-tung bewegt werden. Dabei wird der Durchbruch stets mitlaufend mit dem Laserstrahl bewegt. Zur Herstellung mehrerer unterschiedlicher Konturschnitte können auch mit einem Abstand voneinander mehrere derartige Laserschneidvorrichtungen entlang der Fördervorrichtung angeordnet sein. - Eine ähnliche Vorrichtung ist auch aus der WO 2010/085486 A1 bekannt.

Bei den bekannten Vorrichtungen wird mit jeder Laserschneideinrichtung jeweils ein Konturschnitt erzeugt. Insbesondere die Herstellung langer und komplizierter Konturschnitte erfordert dabei eine relativ lange Zeit. Falls eine bestimmte Transportgeschwindigkeit des Bands gefordert ist, muss eine solche Laserschneideinheit einen weiten Bewegungsweg in oder entgegen der Transportrichtung aufweisen. Das erhöht insgesamt die Baugröße der Vorrichtung. Gleichzeitig erhöht sich damit deren Herstellungsaufwand.

Aufgabe der Erfindung ist es, die Nachteile nach dem Stand der Technik zu beseitigen. Es soll insbesondere ein Verfahren angegeben werden, welches mit einer kompakt aufgebauten Vorrichtung durchführbar ist und gleichzeitig eine schnelle und exakte Herstellung langer Konturschnitte in einem Blechband ermöglicht. Nach einem weiteren Ziel der Erfindung soll eine möglichst kompakt aufgebaute Vorrichtung angegeben werden, mit der mit verbesserter Geschwindigkeit auch lange und komplizierte Konturschnitte in einem Blechband herstellbar sind.

Diese Aufgabe wird durch die Merkmale der Ansprüche 1 und 9 gelöst. Zweckmäßige Ausgestaltungen der Erfindung ergeben sich aus den Merkmalen der Ansprüche 2 bis 8 und 10 bis 22.

Nach Maßgabe der Erfindung wird ein Verfahren zum Herstellen eines Konturschnitts in einem mittels einer Fördervorrichtung in einer Transportrichtung kontinuierlich transportierten Blechband mit folgenden Schritten vorgeschlagen:

Gliedern des Blechbands bezüglich seiner Breite in zumindest drei in Transportrichtung sich erstreckende, überlappende Bearbeitungsstreifen, wobei ein erster Bearbeitungsstreifen eine erste Breite, ein zweiter Bearbeitungsstreifen eine zweite Breite und ein dritter Bearbeitungsstreifen eine dritte Breite aufweist, wobei die erste und die zweite Breite jeweils kleiner als eine Breite des Blechbands sind, und wobei der zweite Bearbeitungsstreifen sich etwa mittig erstreckt und den ersten und einen dritten Bearbeitungsstreifen randlich überlappt,

Bereitstellen einer dem ersten Bearbeitungsstreifen zugeordneten ersten Laserschneideinrichtung, deren erster Arbeitsbereich durch die erste Breite und in Transportrichtung durch eine erste Länge begrenzt ist,

Bereitstellen einer dem zweiten Bearbeitungsstreifen zugeordneten zweiten Laserschneideinrichtung, deren sich stromab- oder stromaufwärts an den ersten Arbeitsbereich anschließender zweiter Arbeitsbereich durch die zweite Breite und in Transportrichtung durch eine zweite Länge begrenzt ist,

Bereitstellen einer dem dritten Bearbeitungsstreifen zugeordneten dritten Laserschneideinrichtung, deren dritter Arbeitsbereich durch die dritte Breite und in Transportrichtung durch eine dritte Länge begrenzt ist, wobei der dritte Arbeitsbereich der dritten Laserschneideinrichtung sich in einer Richtung senkrecht zur Transportrichtung neben dem ersten Arbeitsbereich der ersten Laserschneideinrichtung befindet, und

Steuern der ersten, zweiten und der dritten Laserschneideinrichtungen derart, dass zumindest ein erster Teilschnitt des Konturschnitts mittels der stromaufwärtigen Laserschneideinrichtung hergestellt wird, und dass zumindest ein zur Fertigstellung des Konturschnitts verbleibender zweiter Teilschnitt durch Fortsetzung des ersten Teilschnitts nachfolgend von der stromabwärtigen Laserschneideinrichtung hergestellt wird.

Indem erfindungsgemäß die erste und die zweite Laserschneideinrichtung jeweils einen Arbeitsbereich aufweisen, der sich nur über einen Teilbereich der Breite des Blechbands erstreckt, können innerhalb des jeweiligen Arbeitsbereichs Laserschneideinheiten der Laserschneideinrichtungen schnell und exakt verfahren werden. Indem ferner der zweite Arbeitsbereich der zweiten Laserschneideinrichtung sich stromabwärts, im Wesentlichen versetzt an den ersten Arbeitsbereich der ersten Laserschneideinrichtung anschließt, kann die Herstellung eines Konturschnitts durch zumindest zwei Teilschnitte erfolgen, welche aufeinanderfolgend durch die erste und die zweite Laserschneideinrichtung hergestellt werden. Das ermöglicht vorrichtungsseitig die Verwirklichung einer besonders kompakten Bauform. Gleichzeitig kann die Herstellungsgeschwindigkeit für den Konturschnitt erheblich erhöht werden. Während mittels der stromabwärtigen der Laserschneideinrichtungen der zweite Teilschnitt eines Konturschnitts hergestellt wird, kann mit der stromaufwärtigen der Laserschneideinrichtungen bereits wieder ein erster Teilschnitt des nächstfolgenden Konturschnitts hergestellt werden.

Erfindungsgemäß sind der erste und der dritte Arbeitsbereich in einer Richtung senkrecht zur Transportrichtung nebeneinander angeordnet. Sie werden in diesem Fall im Wesentlichen durch den zweiten Bearbeitungsstreifen voneinander getrennt. Zweckmäßigerweise weisen der erste und der dritte Arbeitsbereich etwa dieselbe Länge auf. Mit der vorgeschlagenen Ausgestaltung ist es möglich, sowohl im ersten als auch im dritten Arbeitsbereich gleichzeitig erste Teilschnitte zu erzeugen, welche dann im z. B. stromabwärts folgenden zweiten Arbeitsbereich mittels der zweiten Laserschneideinrichtung beispielsweise miteinander verbunden werden. Damit kann schnell und einfach ein langer Konturschnitt hergestellt werden. Eine Vorrichtung zur Herstellung des Konturschnitts kann dabei besonders kompakt gehalten werden.

Die erste und die zweite Länge der Arbeitsbereiche ergibt sich insbesondere aus einer maximalen Bewegungsgeschwindigkeit der Laserschneideinheiten innerhalb der Arbeitsbereiche sowie einer gewünschten Bandgeschwindigkeit.

Im Sinne der vorliegenden Erfindung wird unter dem Wort "anschließt" verstanden, dass die Fläche des zweiten Arbeitsbereichs der Fläche des ersten und/oder dritten Arbeitsbereichs stromab- oder stromaufwärts folgt. Dabei kann zwischen der Fläche des zweiten Arbeitsbereichs sowie der Fläche des ersten und/oder dritten Arbeitsbereichs in bzw. entgegen der Transportrichtung ein Abstand bestehen. Ein solcher Abstand kann erforderlich sein, um eine Kollision der Laserschneideinrichtungen zu vermeiden. Bei einer Verwendung schwenkbarer Laserschneideinrichtungen kann der Abstand auch vermieden werden. Der Abstand kann z. B. 0 bis 250 mm betragen.

Nach einer vorteilhaften Ausgestaltung der Erfindung wird ein in der Fördervorrichtung vorgesehener erster Durchbruch in Ausrichtung auf einen von der ersten Laserschneideinrichtung abgestrahlten ersten Laserstrahl mitlaufend bewegt, so dass der erste Laserstrahl den ersten Durchbruch durchstrahlt und ein in der Fördervorrichtung vorgesehener zweiter Durchbruch wird in Ausrichtung auf einen von der zweiten Laserschneideinrichtung abgestrahlten zweiten Laserstrahl mitlaufend bewegt, so dass der zweite Laserstrahl den zweiten Durchbruch durchstrahlt, und wobei ein in der Fördervorrichtung vorgese-hener dritter Durchbruch in Ausrichtung auf den dritten Laserstrahl mitlaufend bewegt wird, so dass ein von der dritten Laserschneideinrichtung abgestrahlter dritter Laserstrahl den dritten Durchbruch durchstrahlt. Indem der erste, zweite und der zweite Durchbruch mitlaufend bewegt werden, wird eine Beschädigung der Fördervorrichtung durch die Laserstrahlen vermieden. Gleichzeitig wird mit der Fördervorrichtung aber stets eine ausreichende Auflagefläche für das Blechband bereitgestellt, so dass der Konturschnitt exakt gemäß seinem vorgegebenen Verlauf hergestellt werden kann.

Nach einer weiteren besonders vorteilhaften Ausgestaltung umfasst die Fördervorrichtung pro Bearbeitungsstreifen zumindest zwei in Transportrichtung aufeinanderfolgend angeordnete Transporteinrichtungen. Die einander gegenüberliegenden Enden der Transporteinrichtungen können mittels einer Stelleinrichtung in oder entgegen der Transportrichtung gleichzeitig verstellt werden. Ein zwischen den Enden gebildeter Schlitz bildet in diesem Fall den Durchbruch, durch welchen der Laserstrahl geführt ist. Die Stelleinrichtung steuert die Bewegung der einander gegenüberliegenden Enden in Übereinstimmung mit den Bewegungen der Laserschneideinrichtung, so dass jederzeit gewährleistet ist, dass der Laserstrahl den Durchbruch durchstrahlt. Dazu wird die Stelleinrichtung und die Laserschneideinrichtung von einer gemeinsamen Steuerung in geeigneter Weise gesteuert.

Im Einzelnen kann die Fördervorrichtung korrespondierend zum ersten Bearbeitungsstreifen eine erste Transporteinrichtung und eine in Transportrichtung sich anschließende zweite Transporteinrichtung umfassen, wobei der erste Durchbruch zwischen einem ersten Ende der ersten Transporteinrichtung und einem gegenüberliegenden zweiten Ende der zweiten Transporteinrichtung gebildet ist, und wobei die mitlaufende Bewegung des ersten Durchbruchs durch eine gleichsinnige Bewegung des ersten und des zweiten Endes in oder entgegen der Transportrichtung erzeugt wird. Die Fördervorrichtung kann ferner korrespondierend zum zweiten Bearbeitungsstreifen eine parallel zur ersten Transporteinrichtung angeordnete dritte Transporteinrichtung und eine parallel zur zweiten Transporteinrichtung angeordnete vierte Transporteinrichtung umfassen, wobei der zweite Durchbruch zwischen dem dritten Ende der dritten Transporteinrichtung und einem gegenüberliegenden vierten Ende der vierten Transporteinrichtung gebildet ist, und wobei die mitlaufende Bewegung des zweiten Durchbruchs durch eine gleichsinnige Bewegung des dritten und des vierten Endes in oder entgegen der Transportrichtung erzeugt wird. Ferner kann die Fördervorrichtung korrespondierend zum dritten Bearbeitungsstreifen eine parallel zur dritten Transportrichtung angeordnete fünfte Transporteinrichtung und eine parallel zur vierten Transporteinrichtung angeordnete sechste Transporteinrichtung umfassen, wobei der dritte Durchbruch zwischen dem fünften Ende der fünften Transporteinrichtung und einem gegenüberliegenden sechsten Ende der sechsten Transporteinrichtung gebildet ist, und wobei die mitlaufende Bewegung des dritten Durchbruchs durch eine gleichsinnige Bewegung des fünften und des sechsten Endes in oder entgegen der Transportrichtung erzeugt wird.

Mit der vorgeschlagenen Ausgestaltung wird sichergestellt, dass die Laserschneideinrichtungen unabhängig voneinander in ihrem jeweiligen Arbeitsbereich beliebige Bewegungen durchführen können, wobei gleichzeitig eine Beschädigung der Fördervorrichtung durch die das Blechband durchdringenden Laserstrahlen vermieden wird.

Vorteilhafterweise wird das Blechband mit einer im Wesentlichen konstanten Transportgeschwindigkeit in Transportrichtung bewegt werden. Die Bewegung des Blechbands in Transportrichtung wird ebenfalls von einer Steuerung gesteuert, welche die mitlaufenden Bewegungen der Durchbrüche sowie die Bewegungen der Laserschneideinrichtungen steuert.

Nach einer weiteren vorteilhaften Ausgestaltung wird bei der Herstellung des Konturschnitts am einen Ende des ersten Teilschnitts ein aus einer vorgegebenen Kontur des Konturschnitts abweichender erster Bogen geschnitten. Der zweite Teilschnitt kann vor dem einen Ende des ersten Teilschnitts einsetzen und in einem auf die vorgegebene Kontur zulaufenden zweiten Bogen geführt werden. Damit ist sichergestellt, dass zwischen dem ersten und dem zweiten Teilschnitt eine durchgehende Verbindung hergestellt wird. Wegen der vorgeschlagenen, von der vorgegebenen Kontur abweichenden Bögen am Ende des ersten und am Beginn des zweiten Teilschnitts kreuzen sich stets beide Teilschnitte.

Unter dem Begriff "Konturschnitt" wird ein Schnitt verstanden, welcher dem Blechband eine abweichende Form verleiht. Ein Konturschnitt kann gerade, gebogen oder geschlossen ausgebildet sein. Eine "Kontur" bzw. ein Verlauf des Konturschnitts ist vorgegeben. Sie wird durch eine programmierte Bewegung der Laserschneideinheiten im jeweiligen Arbeitsbereich erzeugt.

Nach einer weiteren vorteilhaften Ausgestaltung wird eine quer zur Transportrichtung verlaufende Querposition des Blechbands so eingestellt, dass der Konturschnitt mit einer minimalen Anzahl an Teilschnitten herstellbar ist. Unter dem Begriff "Querposition" wird eine Position einer der Kanten des Blechbands bezüglich der relativ dazu feststehenden Arbeitsbereiche der Laserschneideinrichtungen verstanden. Durch eine Veränderung der Querposition des Blechbands kann dieses also relativ zu den Arbeitsbereichen quer zur Transportrichtung verstellt werden. Damit kann erreicht werden, dass ein vorgegebener Konturschnitt mit einer minimalen Anzahl an Teilschnitten herstellbar ist. Beispielsweise kann es sein, dass ein vorgegebener Konturschnitt bei einer mittigen Ausrichtung des Blechbands bezüglich der Arbeitsbereiche nur unter Verwendung von drei Laserschneideinheiten, bei einer geeigneten Verstellung der Bandmitte quer zur Transportrichtung jedoch bereits unter Verwendung von nur zwei Laserschneideinheiten hergestellt werden kann. Damit kann der Programmieraufwand zur Herstellung eines Konturschnitts verringert und eine Qualität des Konturschnitts verbessert werden. Im Falle des Ausfalls einer der Laserschneideinheiten kann u. U. das Blechband quer zur Transportrichtung so verschoben werden, dass die gewünschte Kontur noch mit den funktionierenden verbleibenden Laserschneideinheiten hergestellt werden kann. Das erhöht die Prozesssicherheit.

Sofern zur Herstellung einer Kontur zwei Laserschneideinheiten erforderlich sind, kann durch ein Verschieben des Blechbands quer zur Transportrichtung vorteilhafterweise weiter erreicht werden, dass die von den Laserschneideinheiten erzeugten Teilschnitte im Bereich einer Ecke der Kontur liegen. Damit kann auf eine u. U. erforderliche Nachbearbeitung im Bereich des Aufeinandertreffens der Teilschnitte verzichtet werden.

Die vorgeschlagene Veränderung der Querposition des Blechbands ist selbstverständlich nur bei solchen Blechbändern möglich, deren Breite geringer ist als eine Gesamtbreite der Arbeitsbereiche.

Nach weiterer Maßgabe der Erfindung ist eine Vorrichtung zum Herstellen eines Konturschnitts in einem Blechband vorgesehen,
mit einer Fördervorrichtung zum kontinuierlichen Transportieren des Blechbands in einer Transportrichtung, wobei das Blechband bezüglich seiner Breite in zumindest drei in Transportrichtung sich erstreckende, überlappende Bearbeitungsstreifen gegliedert ist, wobei ein erster Bearbeitungsstreifen eine erste Breite, ein zweiter Bearbeitungsstreifen eine zweite Breite und ein dritter Bearbeitungsstreifen eine dritte Breite aufweist, wobei die erste und die zweite Breite jeweils kleiner als eine Breite des Blechbands sind, wobei der zweite Bearbeitungsstreifen sich etwa mittig erstreckt und den ersten und einen eine dritte Breite aufweisenden dritten Bearbeitungsstreifen randlich überlappt,
einer dem ersten Bearbeitungsstreifen zugeordneten ersten Laserschneideinrichtung, deren erster Arbeitsbereich durch die erste Breite und in Transportrichtung durch eine erste Länge begrenzt ist,
einer dem zweiten Bearbeitungsstreifen zugeordneten zweiten Laserschneideinrichtung, deren sich stromab- oder stromaufwärts an den ersten Arbeitsbereich anschließender zweiter Arbeitsbereich durch die zweite Breite und in Transportrichtung durch eine zweite Länge begrenzt ist,
einer dem dritten Bearbeitungsstreifen zugeordneten dritten Laserschneideinrichtung, deren dritter Arbeitsbereich durch die dritte Breite und in Transportrichtung durch die dritte Länge begrenzt ist, wobei der dritte Arbeitsbereich der dritten Laserschneideinrichtung sich in einer Richtung senkrecht zur Transportrichtung neben dem ersten Arbeitsbereich der ersten Laserschneideinrichtung befindet,
einer Steuereinrichtung zum Steuern der ersten, zweiten und der dritten Laserschneideinrichtungen derart, dass zumindest ein erster Teilschnitt des Konturschnitts mittels der stromaufwärtigen Laserschneideinrichtung hergestellt wird, und dass zumindest ein zur Fertigstellung des Konturschnitts verbleibender zweiter Teilschnitt durch Fortsetzung des ersten Teilschnitts nachfolgend von der stromabwärtigen Laserschneideinrichtung hergestellt wird.

Die vorgeschlagene Vorrichtung ermöglicht eine effektive Herstellung eines oder mehrerer Konturschnitte in einem Blechband. Dabei kann eine Länge der Vorrichtung in Transportrichtung relativ klein gehalten werden. Wegen der vorgeschlagenen Anordnung der Arbeitsbereiche der Laserschneideinrichtungen sowie deren Steuerung können gleichzeitig an einem Konturschnitt ein zweiter Teilschnitt und an einem nächstfolgenden Konturschnitt ein erster Teilschnitt ausgeführt werden.

Der zweite Arbeitsbereich kann sich stromauf- oder stromabwärts an den ersten und den dritten Arbeitsbereich so anschließen, dass sich die drei Arbeitsbereiche bezüglich ihrer Breite überlappen. Dabei kann der zweite Arbeitsbereich in oder entgegen der Transportrichtung mit einem Abstand von 0 bis 250 mm vom ersten und dritten Arbeitsbereich beabstandet sein.

Zweckmäßigerweise werden mit der Steuereinrichtung die erste, zweite und dritte Laserschneideinrichtung derart gesteuert, dass mit einer stromaufwärtigen Laserschneideinheit zumindest ein erster Teilschnitt des Konturschnitts hergestellt wird, und dass zumindest ein zur Fertigstellung des Konturschnitts verbleibender zweiter Teilschnitt durch Fortsetzung des ersten Teilschnitts nachfolgend von einer stromabwärtigen Laserschneideinheit hergestellt wird. - Das Vorsehen von drei Laserschneideinrichtungen, von denen zumindest eine stromabwärts der übrigen Laserschneideinrichtungen angeordnet ist, und durch das Vorsehen der auf die Bearbeitungsstreifen begrenzten Breite der jeweiligen Arbeitsbereiche kann eine Geschwindigkeit zur Herstellung eines Konturschnitts erheblich erhöht werden.

Bei der Steuereinrichtung kann es sich um eine herkömmliche, programmierbare Prozessrechnersteuerung oder einen Computer mit einem geeigneten Steuerungsprogramm handeln.

Nach einer vorteilhaften Ausgestaltung ist eine erste Durchbruchbewegungseinrichtung zum mitlaufenden Bewegen eines in der Fördervorrichtung vorgesehenen ersten Durchbruchs in Ausrichtung auf einen von der ersten Laserschneideinrichtung abgestrahlten ersten Laserstrahl vorgesehen, so dass der erste Laserstrahl den ersten Durchbruch durchstrahlt, wobei eine zweite Durchbruchbewegungseinrichtung zum mitlaufenden Bewegen eines in der Fördervorrichtung vorgesehenen zweiten Durchbruchs in Ausrichtung auf einen von der zweiten Laserschneideinrichtung abgestrahlten zweiten Laserstrahl vorgesehen ist, so dass der zweite Laserstrahl den zweiten Durchbruch durchstrahlt, und wobei eine dritte Durchbruchbewegungseinrichtung zum mitlaufenden Bewegen eines in der Fördervorrichtung vorgesehenen dritten Durchbruchs in Ausrichtung auf den dritten Laserstrahl vorgesehen ist, so dass ein von der dritten Laserschneideinrichtung abgestrahlter dritter Laserstrahl den dritten Durchbruch durchstrahlt. - Mit der vorgeschlagenen Ausgestaltung der Fördervorrichtung kann eine Beschädigung derselben durch die von den Laserschneideinrichtung erzeugten Laserstrahlen vermieden werden.

Nach einer vorteilhaften Ausgestaltung ist eine Verstelleinrichtung zum Verstellen einer das Blechband aufnehmenden Haspel in einer quer zur Transportrichtung verlaufenden Querrichtung vorgesehen. Die Haspel kann beispielsweise auf quer zur Transportrichtung verlaufenden Schienen geführt und elektromotorisch in der Querrichtung verstellbar sein. Die Verstelleinrichtung umfasst zweckmäßigerweise zusätzlich eine in der Querrichtung verstellbare Bandseitenführung. Eine solche Bandseitenführung ermöglicht eine besonders exakte Justierung des Blechbands bezüglich der Arbeitsbereiche.

Zweckmäßigerweise ist mittels der Verstelleinrichtung eine Querposition des Blechbands so einstellbar, dass der Konturschnitt mit einer minimalen Anzahl an Teilschnitten herstellbar ist. Dazu kann die Verstelleinrichtung mit der Steuereinrichtung automatisch in eine geeignete Querposition verstellt werden.

Nach einer weiteren Ausgestaltung der Erfindung ist eine Regeleinrichtung zur Regelung der Transportgeschwindigkeit vorgesehen. Damit kann eine vorgegebene Transportgeschwindigkeit konstant gehalten werden.

Nach einer vorteilhaften Ausgestaltung sind die erste, zweite und dritte Laserschneideinrichtung als Montageeinheiten ausgestaltet. Jede dieser Montageeinheiten weist einen Antrieb auf, mit der zumindest ein Laser innerhalb des durch die Laserschneideinrichtung gegebenen Arbeitsbereichs beliebig bewegbar ist. Derartige Montageeinheiten lassen sich bei Bedarf einfach auswechseln. Zweckmäßigerweise sind die Montageeinheiten baugleich ausgeführt.

Nach einer weiteren vorteilhaften Ausgestaltung sind die erste, zweite und dritte Laserschneideinrichtung bezüglich der Fördervorrichtung schwingungsentkoppelt montiert. Durch die Fördervorrichtung erzeugte Schwingungen können damit nicht auf die Laserschneideinrichtung einwirken und eventuell Ungenauigkeiten bei der Herstellung der Konturschnitte hervorrufen.

Nach einer weiteren besonders vorteilhaften Ausgestaltung ist zumindest eine der Montageeinheiten bezüglich der Fördervorrichtung verstellbar gehalten. D. h. die Montageposition der Montageeinheit bezüglich der Fördervorrichtung kann, beispielsweise mittels eines Spindeltriebs oder dgl., parallel zur Transportrichtung und/oder in einer Richtung senkrecht zur Transportrichtung verstellt werden. Das ermöglicht eine geeignete Anordnung der Montageeinheiten zueinander. Damit kann u. U. eine besonders effiziente Herstellung der Konturschnitte erfolgen.

Nach einem weiteren Ausgestaltungsmerkmal sind im Bereich der Seitenränder der Fördervorrichtung weitere Laserschneideinrichtungen zur Herstellung eines Randbeschnitts des Blechbands vorgesehen. Damit kann sicher und zuverlässig ein Konturblech mit vorgegebener Geometrie aus dem Blechband herausgeschnitten werden. Eine eventuelle Randsäbeligkeit des Blechbands kann durch den Randbeschnitt sicher und zuverlässig entfernt werden.

Wegen der Vorteile und der weiteren Ausgestaltungen der Fördervorrichtung wird auf die vorangegangenen Ausführungen verwiesen.

Nachfolgend werden Ausführungsbeispiele der Erfindung anhand der Zeichnung näher erläutert. Es zeigen:
- Fig. 1: eine Draufsicht auf eine Vorrichtung zum Herstellen einer Blechplatine,
- Fig. 2: eine Seitenansicht gemäß Fig. 1,
- Fig. 3: eine Detailansicht gemäß Fig. 1,
- Fig. 4: eine Seitenansicht gemäß Fig. 3,
- Fig. 5: eine schematische Draufsicht auf ein Blechband mit einem Konturschnitt,
- Fig. 6: eine vergrößerte Detailansicht gemäß Fig. 5,
- Fig. 7: eine Variante gemäß Fig. 6,
- Fig. 8: schematisch den Bewegungsablauf von Laserschneideinheiten,
- Fig. 9: eine Draufsicht auf Konturschnittlinien eines mittig geführten Blechbands und
- Fig. 10: eine Draufsicht gemäß Fig. 9, wobei das Blechband auf eine abweichende Querposition eingestellt ist.

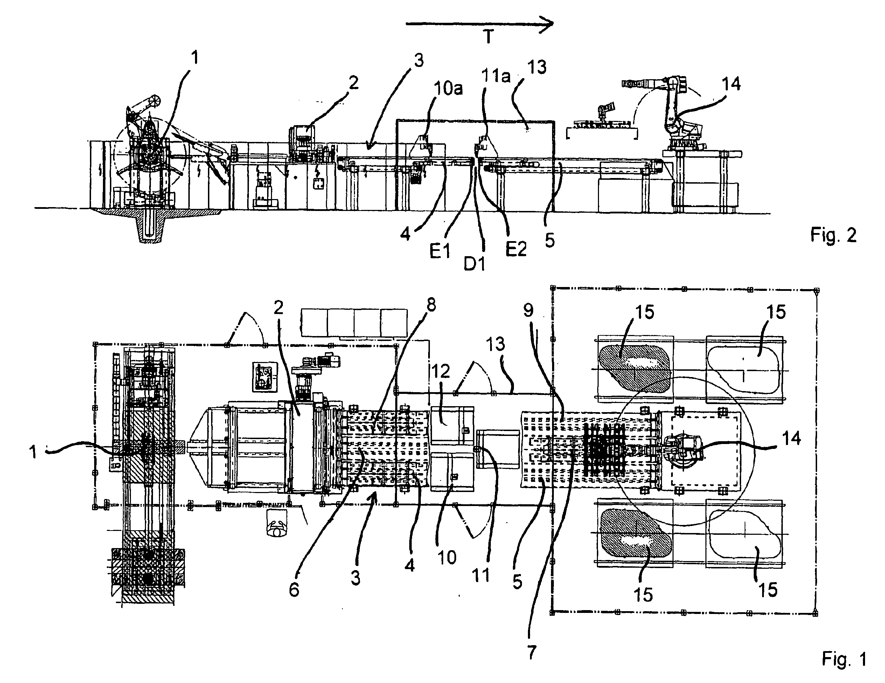

Die Fig. 1 bis 4 zeigen eine Vorrichtung zur Herstellung eines Konturschnitts in einem Blechband bzw. zur Herstellung von Blechplatinen mit einer vorgegebenen Form. Mit dem Bezugszeichen 1 ist eine Haspel bezeichnet, welche der Aufnahme eines in Form einer Spule bzw. eines Coils vorliegenden Blechbands (hier nicht gezeigt) dient. Stromabwärts der Haspel 1 befindet sich eine Walzenrichteinrichtung 2. Mit dem Bezugszeichen 3 ist allgemein eine Fördervorrichtung bezeichnet. Die Fördervorrichtung 3 umfasst eine erste Transporteinrichtung 4, der stromabwärts, d. h. in einer Transportrichtung T nachfolgend, eine zweite Transporteinrichtung 5 nachgeordnet ist. Zwischen einem ersten Ende E1 der ersten Transporteinrichtung 4 und einem zweiten Ende E2 der zweiten Transporteinrichtung 5 ist ein erster Durchbruch D1 gebildet, welcher die Form eines Schlitzes aufweist.

Die erste 4 und die zweite Transporteinrichtung 5 sind hier nach Art von Förderbändern ausgeführt. Das erste E1 und das zweite Ende E2 der Transporteinrichtungen 4, 5 kann in und entgegen einer Transportrichtung T gleichsinnig und hin und her bewegt werden. Dazu ist eine hier nicht näher gezeigte Durchbruchsbewegungs- bzw. Stelleinrichtung vorgesehen. In ähnlicher Ausgestaltung umfasst die Fördervorrichtung 3 in paralleler Anordnung zur ersten Transporteinrichtung 4 eine dritte Transporteinrichtung 6 und in paralleler Anordnung zur zweiten Transporteinrichtung 5 eine vierte Transporteinrichtung 7. Wiederum in paralleler Anordnung zur dritten Transporteinrichtung 6 ist eine fünfte Transporteinrichtung 8 sowie eine sechste Transporteinrichtung 9 vorgesehen. Hier nicht im Einzelnen gezeigte einander gegenüberliegende Enden der dritten bis sechsten Transportvorrichtung 6, 7, 8, 9 können wie die ersten E1 und zweiten Enden E2 in oder entgegen der Transportrichtung T mittels der Stelleinrichtung hin und her bewegt werden. Auf diese Weise können ein zwischen der dritten 6 und der vierten Transporteinrichtung 7 gebildeter zweiter Durchbruch (hier nicht gezeigt) sowie ein zwischen der fünften 8 und der sechsten Transporteinrichtung 9 gebildeter dritter Durchbruch (hier nicht gezeigt) unabhängig voneinander bewegt werden.

Mit dem Bezugszeichen 10 ist eine erste Laserschneideinrichtung, mit dem Bezugszeichen 11 eine stromabwärts abgeordnete zweite Laserschneideinrichtung und mit dem Bezugszeichen 12 eine neben der ersten Laserschneideinrichtung 10 angeordnete dritte Laserschneideinrichtung 12 bezeichnet. Die Laserschneideinrichtungen 10, 11, 12 sind von einem Schutzgehäuse 13 umgeben. Stromabwärts der Fördervorrichtung 3 befindet sich ein Roboter 14, mit dem die aus dem Blechband geschnittenen Blechplatinen 15 zu Transportstapeln gestapelt werden.

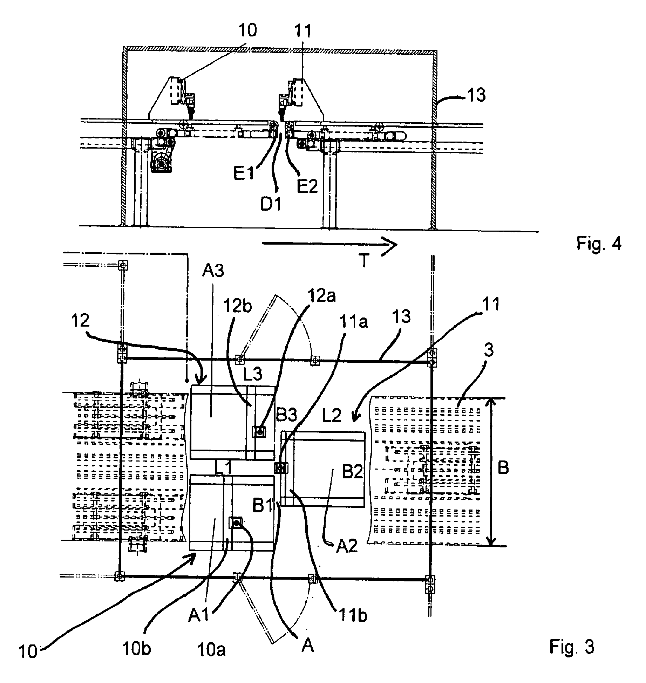

Die Fig. 3 und 4 zeigen Detailansichten der Fig. 1 und 2. Jede der Laserschneideinrichtungen 10, 11, 12 weist jeweils eine Laserschneideinheit 10a, 11a, 12a auf, welche jeweils an einem in Transportrichtung T hin und her bewegbaren Schlitten 10b, 11b, 12b aufgenommen sind. Ferner ist jede der Laserschneideinheiten 10a, 11a, 12a senkrecht zur Transportrichtung T am jeweiligen Schlitten 10b, 11b, 12b bewegbar.

Die erste Laserschneideinheit 10a ist in einem ersten Arbeitsbereich A1 bewegbar, welcher eine erste Breite B1 und eine erste Länge L1 aufweist. Ein in einer Richtung senkrecht zur Transportrichtung T daneben befindlicher dritter Arbeitsbereich A3 der dritten Laserschneideinheit 12 weist eine dritte Länge L3 sowie eine dritte Breite B3 auf. Die erste L1 und die dritte Länge L3 können einander entsprechen. Die erste Breite B1 und die dritte Breite B3 können gleich groß sein. Vorteilhafterweise erstreckt sich der dritte Arbeitsbereich mit seiner dritten Länge L3 über die erste Länge L1 des ersten Arbeitsbereichs A1. In diesem Fall sind der erste A1 und der dritte Arbeitsbereich A3 in der Richtung senkrecht zur Transportrichtung nicht versetzt zueinander angeordnet, sie erstrecken sich - wie insbesondere in Fig. 3 gezeigt ist - in Transportrichtung T über einen etwa identischen Abschnitt der Fördervorrichtung 3.

Die erste 10a und die dritte Laserschneideinrichtung 12a können gleichzeitig in den nebeneinander liegenden ersten A1 und dritten Arbeitsbereichen A3 bewegt werden. Dabei können die entsprechenden ersten und dritten Durchbrüche der Transporteinrichtung automatisch mitlaufend bewegt werden. - Die Anordnung zweier oder mehrerer Arbeitsbereiche senkrecht zur Transportrichtung nebeneinander trägt zu einer in Transportrichtung besonders kurzen Bauform der Vorrichtung bei. Abgesehen davon kann damit die Herstellungsgeschwindigkeit von Konturblechen erhöht werden.

Stromabwärts des ersten A1 und des dritten Arbeitsbereichs A3 befindet sich in etwa mittiger Anordnung bezüglich der Fördervorrichtung 3 ein zweiter Arbeitsbereich A2 der zweiten Laserschneideinheit 11a. Der zweite Arbeitsbereich A2 weist eine zweite Länge L2 und eine zweite Breite B2 auf.

Die erste B1, die zweite B2 und die dritte Breite B3 sind jeweils kleiner als eine Breite B eines Blechbands bzw. der Fördervorrichtung 3. Wie aus Fig. 3 ersichtlich ist, sind die erste B1 und die dritte Breite B3 so gewählt, dass sie sich mit der zweiten Breite B2 des stromabwärts nachgeordneten zweiten Arbeitsbereichs A2 überlappen. In diesem Fall gilt also B1 + B2 + B3 > B. Der zweite Arbeitsbereich A2 ist in Transportrichtung T mit einem geringen Abstand A vom ersten A1 und dritten Arbeitsbereich A3 beabstandet.

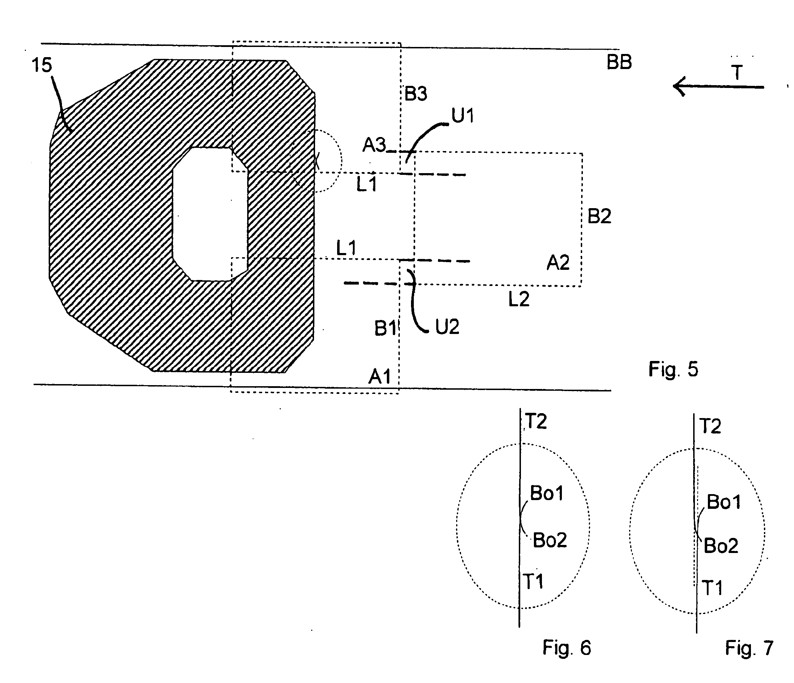

Das mit der Vorrichtung durchführbare Verfahren wird nunmehr, insbesondere in Zusammensicht mit den Fig. 5 bis 8, näher erläutert.

Bei dem in Fig. 5 gezeigten Ausführungsbeispiel ist der bezüglich des Blechbands BB etwa mittig angeordnete zweite Arbeitsbereich A2 stromaufwärts des ersten A1 und des dritten Arbeitsbereichs A3 angeordnet. Ähnlich wie im vorangegangenen Ausführungsbeispiel ist das Blechband BB auch hier wieder in drei Bearbeitungsstreifen gegliedert, deren Breiten der ersten Breite B1 des ersten Arbeitsbereichs A1, der zweiten Breite B2 des zweiten Arbeitsbereichs A2 und der dritten Breite B3 des dritten Arbeitsbereichs A3 entsprechen. Die Bearbeitungsstreifen überlappen randlich. Ein randlicher Überlappungsbereich ist mit dem Bezugszeichen U1 und U2 bezeichnet.

Zur Herstellung der in Fig. 5 gezeigten Blechplatine 15 wird das Blechband BB zunächst durch den zweiten Arbeitsbereich A2 geführt. Dabei erzeugt die zweite Laserschneideinheit 11a die in den zweiten Bearbeitungsstreifen fallenden Teilschnitte, von denen ein erster Teilschnitt in den Fig. 6 und 7 mit T1 bezeichnet ist. Der erste Teilschnitt T1 weist an seinem Ende einen von der gewünschten Kontur geringfügig abweichenden ersten Bogen Bo1 auf.

Nachfolgend gelangt das Blechband BB in den ersten A1 und dritten Arbeitsbereich A3. Dabei wird beispielsweise mit der dritten Laserschneideinheit 11a ein mit dem Bezugszeichen T2 bezeichneter zweiter Teilschnitt erzeugt, welcher mit einem geringfügig von der gewünschten Kontur abweichenden zweiten Bogen Bo2 einsetzt.

Bei der in Fig. 6 gezeigten Detailansicht setzt der zweite Teilschnitt T2 die gewünschte gerade Kontur exakt fort.

Wie aus Fig. 7 ersichtlich ist, wird durch das Auslaufen des ersten Teilschnitts T1 mit einem ersten Bogen Bo1 und das Einsetzen des zweiten Teilschnitts T2 mit einem zweiten Bogen Bo2 auch im Falle eines Versatzes gewährleistet, dass der erste T1 und der zweite Teilschnitt T2 miteinander verbunden sind. Damit kann ein sicheres und vollständiges Trennen der Blechplatine 15 von den übrigen Bestandteilen des Blechbands BB gewährleistet werden.

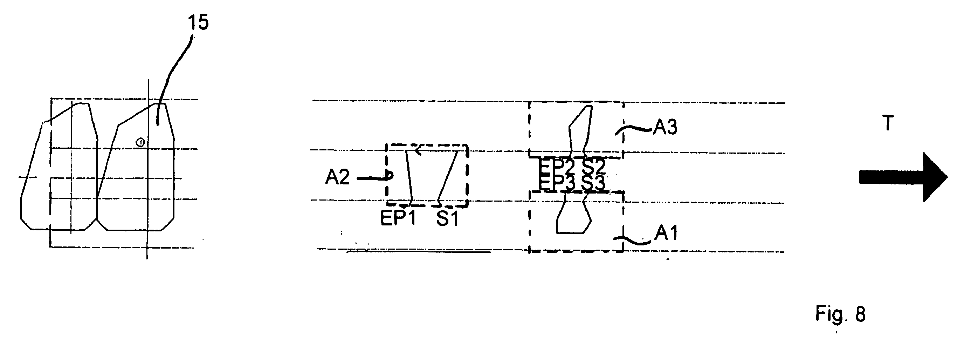

Fig. 8 zeigt beispielhaft den Bewegungsablauf einer ersten 10a, zweiten 11a und dritten Laserschneideinheit 12a, wie er zur Herstellung der gezeigten Blechplatine 15 erforderlich ist. Hier befindet sich wiederum der zweite Arbeitsbereich A2 stromaufwärts des ersten A1 und des dritten Arbeitsbereichs A3. Mit der im zweiten Arbeitsbereich A2 befindlichen zweiten Laserschneideinheit 11a wird die in Fig. 8 ersichtliche Bewegungsbahn abgefahren, welche von einem ersten Startpunkt S1 bis zu einem ersten Endpunkt EP1 verläuft. Nachfolgend werden stromabwärts gleichzeitig im ersten A1 und dritten Arbeitsbereich A3 mit der ersten 10a und der dritten Laserschneideinheit 12a die mit den Startpunkten S2 und S3 bezeichneten weiteren Bewegungsbahnen abgefahren. Damit kann die links in Fig. 8 gezeigte Kontur schnell und effizient hergestellt werden.

Mit dem vorgeschlagenen Verfahren ist es möglich, das Blechband BB beispielsweise mit einer Geschwindigkeit im Bereich von 5 bis 100 m/min, vorzugsweise 20 bis 50 m/min, in Transportrichtung T mit einer konstanten Geschwindigkeit zu bewegen. Die Laserschneideinheiten 10a, 11a, 12a können mit einer Geschwindigkeit im Bereich von 20 bis 60 m/min bewegt werden. Zur Steuerung der Vorrichtung kann zunächst beispielsweise eine bestimmte Bandgeschwindigkeit vorgegeben werden. Sodann können bei vorgegebener Kontur der Blechplatinen 15 die Bewegungen der Laserschneideinheiten 10a, 11a, 12a berechnet werden.

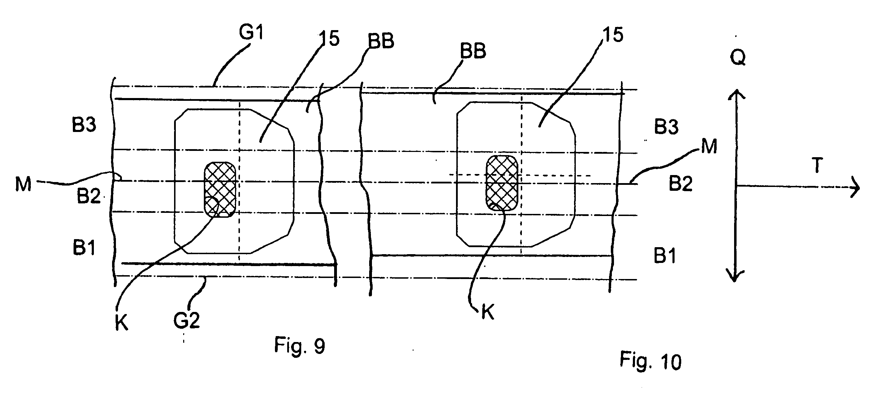

Die Fig. 9 und 10 zeigen anhand eines Beispiels die vorteilhaften Wirkungen einer Verstellung des Blechbands BB in eine senkrecht zur Transportrichtung T verlaufende Querrichtung Q.

Bei dem in Fig. 9 gezeigten Beispiel ist das Blechband BB bezüglich der äußeren Grenzen G1, G2 der Arbeitsbereiche der Laserschneideinrichtungen 10, 11, 12 mittig angeordnet. Eine mittig zwischen den Grenzen G1, G2 verlaufende Mittelachse M fällt mit einer (hier nicht gezeigten) weiteren Mittelachse des Blechbands BB zusammen. In dem in Fig. 9 gezeigten Beispiel fällt eine Innenkontur K in den durch die erste B1 und zweite Breite B2 gegebenen ersten und zweiten Arbeitsbereich der ersten und zweiten Laserschneideinrichtung (hier nicht gezeigt). D. h. die Innenkontur K muss hier durch Zusammenwirken zweier Laserschneideinheiten geschnitten werden.

Bei dem in Fig. 10 gezeigten Beispiel ist das Blechband BB bezüglich der äußeren Grenzen G1, G2 in der Querrichtung Q so verstellt, dass die Innenkontur K lediglich in den durch die zweite Breite B2 definierten zweiten Arbeitsbereich fällt. Infolgedessen kann die Innenkontur K lediglich durch die Wirkung der zweiten Laserschneideinrichtung (hier nicht gezeigt) hergestellt werden. Damit kann der Programmieraufwand zur Herstellung der Innenkontur K vermindert, die Gestalt der Innenkontur K verbessert und außerdem die Prozesssicherheit erhöht werden.

Obwohl es in den Figuren nicht gezeigt ist, können nach dem Gegenstand der vorliegenden Erfindung auch mehr als drei Laserschneideinheiten verwendet werden. Beispielsweise ist es möglich, senkrecht zur Transportrichtung des Blechbands nebeneinander drei Laserschneideinrichtungen vorzusehen. Stromauf- oder stromabwärts können zwei weitere Laserschneideinrichtungen vorgesehen sein, welche die beiden Lücken zwischen den drei vorgenannten Laserschneideinheiten überlappen. Auch die beiden stromauf- oder stromabwärts vorgesehenen weiteren Laserschneideinheiten können senkrecht zur Transportrichtung nebeneinander angeordnet sein. - Im Falle der Verwendung von fünf Laserschneideinheiten ist selbstverständlich eine Fördervorrichtung mit fünf mitlaufenden Durchbrüchen vorzusehen, welche jeweils einer der Laserschneideinheiten zugeordnet ist.

### Bezugszeichenliste

- 1: Haspel
- 2: Walzenrichtvorrichtung
- 3: Fördervorrichtung
- 4: erste Transporteinrichtung
- 5: zweite Transporteinrichtung
- 6: dritte Transporteinrichtung
- 7: vierte Transporteinrichtung
- 8: fünfte Transporteinrichtung
- 9: sechste Transporteinrichtung
- 10: erste Laserschneideinrichtung
- 10a: erste Laserschneideinheit
- 10b: erster Schlitten
- 11: zweite Laserschneideinrichtung
- 11a: zweite Laserschneideinheit
- 11b: zweiter Schlitten
- 12: dritte Laserschneideinrichtung
- 12a: dritte Laserschneideinheit
- 12b: dritter Schlitten
- 13: Schutzgehäuse
- 14: Roboter
- 15: Blechplatine
- A: Abstand
- A1: erster Arbeitsbereich
- A2: zweiter Arbeitsbereich
- A3: dritter Arbeitsbereich
- B: Breite
- BB: Blechband
- Bo1: erster Bogen
- Bo2: zweiter Bogen
- B1: erste Breite
- B2: zweite Breite
- B3: dritte Breite
- D1: erster Durchbruch
- EP1: erster Endpunkt
- EP2: zweiter Endpunkt
- EP3: dritter Endpunkt
- E1: erstes Ende
- E2: zweites Ende
- **G1,** G2: äußere Grenzen
- K: Innenkontur
- L1: erste Länge
- L2: zweite Länge
- L3: dritte Länge
- M: Mittelachse
- Q: Querrichtung
- S1: erster Startpunkt
- S2: zweiter Startpunkt
- S3: dritter Startpunkt
- T: Transportrichtung
- T1: erster Teilschnitt
- T2: zweiter Teilschnitt
- U1: erster Überlappungsbereich
- U2: zweiter Überlappungsbereich

## Patentansprüche

1. Verfahren zum Herstellen eines Konturschnitts in einem mittels einer Fördervorrichtung (3) in einer Transportrichtung (T) kontinuierlich transportierten Blechband (BB) mit folgenden Schritten:
Gliedern des Blechbands (BB) bezüglich seiner Breite (B) in zumindest drei in Transportrichtung (T) sich erstreckende, überlappende Bearbeitungsstreifen, wobei ein erster Bearbeitungsstreifen eine erste Breite (B1), ein zweiter Bearbeitungsstreifen eine zweite Breite (B2) und ein dritter Bearbeitungsstreifen eine dritte Breite (B3) aufweist, wobei die erste (B1) und die zweite Breite (B2) jeweils kleiner als eine Breite (B) des Blechbands (BB) sind, und wobei der zweite Bearbeitungsstreifen sich etwa mittig erstreckt und den ersten und einen dritten Bearbeitungsstreifen randlich überlappt,
Bereitstellen einer dem ersten Bearbeitungsstreifen zugeordneten ersten Laserschneideinrichtung (10), deren erster Arbeitsbereich (A1) durch die erste Breite (B1) und in Transportrichtung (T) durch eine erste Länge (L1) begrenzt ist,
Bereitstellen einer dem zweiten Bearbeitungsstreifen zugeordneten zweiten Laserschneideinrichtung (11), deren sich stromab- oder stromaufwärts an den ersten Arbeitsbereich (A1) anschließender zweiter Arbeitsbereich (A2) durch die zweite Breite (B2) und in Transportrichtung (T) durch eine zweite Länge (L2) begrenzt ist,
Bereitstellen einer dem dritten Bearbeitungsstreifen zugeordneten dritten Laserschneideinrichtung (12), deren dritter Arbeitsbereich (A3) durch die dritte Breite (B3) und in Transportrichtung (T) durch eine dritte Länge (L3) begrenzt ist, wobei der dritte Arbeitsbereich (A3) der dritten Laserscheideinrichtung (12) sich in einer Richtung senkrecht zur Transportrichtung (T) neben dem ersten Arbeitsbereich (A1) der ersten Laserscheideinrichtung befindet, und
Steuern der ersten (10), zweiten (11) und der dritten Laserschneideinrichtungen (12) derart, dass zumindest ein erster Teilschnitt (T1) des Konturschnitts mittels der stromaufwärtigen Laserschneideinrichtung (10, 11, 12) hergestellt wird, und dass zumindest ein zur Fertigstellung des Konturschnitts verbleibender zweiter Teilschnitt (T2) durch Fortsetzung des ersten Teilschnitts (T1) nachfolgend von der stromabwärtigen Laserschneideinrichtung (10, 11) hergestellt wird.

2. Verfahren nach Anspruch 1, wobei ein in der Fördervorrichtung (3) vorgesehener erster Durchbruch (D1) in Ausrichtung auf einen von der ersten Laserschneideinrichtung (10) abgestrahlten ersten Laserstrahl mitlaufend bewegt wird, so dass der erste Laserstahl den ersten Durchbruch (D1) durchstrahlt, wobei ein in der Fördervorrichtung (3) vorgesehener zweiter Durchbruch in Ausrichtung auf einen von der zweiten Laserschneideinrichtung (11) abgestrahlten zweiten Laserstrahl mitlaufend bewegt wird, so dass der zweite Laserstahl den zweiten Durchbruch durchstrahlt, und wobei ein in der Fördervorrichtung (3) vorgesehener dritter Durchbruch in Ausrichtung auf den dritten Laserstrahl mitlaufend bewegt wird, so dass ein von der dritten Laserschneideinrichtung (12) abgestrahlter dritter Laserstahl den dritten Durchbruch durchstrahlt.

3. Verfahren nach einem der vorhergehenden Ansprüche, wobei die Fördervorrichtung (3) korrespondierend zum ersten Bearbeitungsstreifen eine erste Transporteinrichtung (4) und eine in Transportrichtung (T) sich anschließende zweite Transporteinrichtung (5) umfasst, wobei der erste Durchbruch (D1) zwischen einem ersten Ende (E1) der ersten Transporteinrichtung (4) und einem gegenüberliegenden zweiten Ende (E2) der zweiten Transporteinrichtung (5) gebildet ist, und wobei die mitlaufende Bewegung des ersten Durchbruchs (D1) durch eine gleichsinnige Bewegung des ersten (E1) und des zweiten Endes (E2) in oder entgegen der Transportrichtung (T) erzeugt wird.

4. Verfahren nach einem der vorhergehenden Ansprüche, wobei die Fördervorrichtung (3) korrespondierend zum zweiten Bearbeitungsstreifen eine parallel zur ersten Transporteinrichtung (4) angeordnete dritte Transporteinrichtung (6) und eine parallel zur zweiten Transporteinrichtung (5) angeordnete vierte Transporteinrichtung (7) umfasst, wobei der zweite Durchbruch zwischen einem dritten Ende der dritten Transporteinrichtung (6) und einem gegenüberliegenden vierten Ende der vierten Transporteinrichtung (7) gebildet ist, und wobei die mitlaufende Bewegung des zweiten Durchbruchs durch eine gleichsinnige Bewegung des dritten und des vierten Endes in oder entgegen der Transportrichtung (T) erzeugt wird.

5. Verfahren nach einem der vorhergehenden Ansprüche, wobei die Fördervorrichtung (3) korrespondierend zum dritten Bearbeitungsstreifen eine parallel zur dritten Transporteinrichtung (6) angeordnete fünfte Transporteinrichtung (8) und eine parallel zur vierten Transporteinrichtung (7) angeordnete sechste Transporteinrichtung (9) umfasst, wobei der dritte Durchbruch zwischen einem fünften Ende der fünften Transporteinrichtung (8) und einem gegenüberliegenden sechsten Ende der sechsten Transporteinrichtung (9) gebildet ist, und wobei die mitlaufende Bewegung des dritten Durchbruchs durch eine gleichsinnige Bewegung des fünften und des sechsten Endes in oder entgegen der Transportrichtung (T) erzeugt wird.

6. Verfahren nach einem der vorhergehenden Ansprüche, wobei das Blechband (BB) mit einer im Wesentlichen konstanten Transportgeschwindigkeit in Transportrichtung (T) bewegt wird.

7. Verfahren nach einem der vorhergehenden Ansprüche, wobei bei der Herstellung des Konturschnitts am einen Ende des ersten Teilschnitts (T1) ein aus einer vorgegebenen Kontur des Konturschnitts abweichender erster Bogen (B1) geschnitten wird, und wobei der zweite Teilschnitt (T2) vor dem einen Ende des ersten Teilschnitts (T1) einsetzt und in einem auf die vorgegebene Kontur zulaufenden zweiten Bogen (Bo2) geführt wird.

8. Verfahren nach einem der vorhergehenden Ansprüche, wobei eine quer zur Transportrichtung (T) verlaufende Querposition des Blechbands (BB) so eingestellt wird, dass der Konturschnitt mit einer minimalen Anzahl an Teilschnitten (T1, T2) herstellbar ist.

9. Vorrichtung zum Herstellen eines Konturschnitts in einem Blechband (BB),
mit einer Fördervorrichtung (3) zum kontinuierlichen Transportieren des Blechbands (BB) in eine Transportrichtung (T), wobei das Blechband (BB) bezüglich seiner Breite (B) in zumindest drei in Transportrichtung (T) sich erstreckende, überlappende Bearbeitungsstreifen gegliedert ist, wobei ein erster Bearbeitungsstreifen eine erste Breite (B1), ein zweiter Bearbeitungsstreifen eine zweite Breite (B2), und ein dritter Bearbeitungsstreifen eine dritte Breite (B3) aufweist, wobei die erste (B1) und die zweite Breite (B2) jeweils kleiner als eine Breite (B) des Blechbands (BB) sind, und wobei der zweite Bearbeitungsstreifen sich etwa mittig erstreckt und den ersten und einen eine dritte Breite (B3) aufweisenden dritten Bearbeitungsstreifen randlich überlappt,
einer dem ersten Bearbeitungsstreifen zugeordneten ersten Laserschneideinrichtung (10), deren erster Arbeitsbereich (A1) durch die erste Breite (B1) und in Transportrichtung (T) durch eine erste Länge (L1) begrenzt ist,
einer dem zweiten Bearbeitungsstreifen zugeordneten zweiten Laserschneideinrichtung (11), deren sich stromab- oder stromaufwärts an den ersten Arbeitsbereich (A1) anschließender zweiter Arbeitsbereich (A2) durch die zweite Breite (B2) und in Transportrichtung (T) durch eine zweite Länge (L2) begrenzt ist,
einer dem dritten Bearbeitungsstreifen zugeordneten dritten Laserschneideinrichtung (12), deren dritter Arbeitsbereich (A3) durch die dritte Breite (B3) und in Transportrichtung (T) durch eine dritte Länge (L3) begrenzt ist, wobei der dritte Arbeitsbereich (A3) der dritten Laserschneideinrichtung (12) sich in einer Richtung senkrecht zur Transportrichtung (T) neben dem ersten Arbeitsbereich (A1) der ersten Laserschneideinrichtung befindet und
einer Steuereinrichtung zum Steuern der ersten (10), zweiten (11) und der dritten Laserschneideinrichtungen (12) derart, dass zumindest ein erster Teilschnitt (T1) des Konturschnitts mittels der stromaufwärtigen Laserschneideinrichtung (10, 11, 12) hergestellt wird, und dass zumindest ein zur Fertigstellung des Konturschnitts verbleibender zweiter Teilschnitt (T2) durch Fortsetzung des ersten Teilschnitts (T1) nachfolgend von der stromabwärtigen Laserschneideinrichtung (10, 11) hergestellt wird.

10. Vorrichtung nach Anspruch 9, wobei eine erste Durchbruchbewegungseinrichtung zum mitlaufenden Bewegen eines in der Fördervorrichtung (3) vorgesehenen ersten Durchbruchs (D1) in Ausrichtung auf einen von der ersten Laserschneideinrichtung (10) abgestrahlten ersten Laserstrahl vorgesehen ist, so dass der erste Laserstahl den ersten Durchbruch (D1) durchstrahlt, wobei eine zweite Durchbruchbewegungseinrichtung zum mitlaufenden Bewegen eines in der Fördervorrichtung (3) vorgesehenen zweiten Durchbruchs in Ausrichtung auf einen von der zweiten Laserschneideinrichtung (11) abgestrahlten zweiten Laserstrahl vorgesehen ist, so dass der zweite Laserstahl den zweiten Durchbruch durchstrahlt, und wobei eine dritte Durchbruchbewegungseinrichtung zum mitlaufenden Bewegen eines in der Fördervorrichtung (3) vorgesehenen dritten Durchbruchs in Ausrichtung auf den dritten Laserstrahl vorgesehen ist, so dass ein von der dritten Laserschneideinrichtung (12) abgestrahlter dritter Laserstahl den dritten Durchbruch durchstrahlt.

11. Vorrichtung nach einem der Ansprüche 9 oder 10, wobei mit der Steuereinrichtung die erste (10), zweite (11) und dritte Laserschneideinrichtung (12) derart gesteuert werden, dass mit einer stromaufwärtigen Laserschneideinrichtung (10, 11, 12) zumindest ein erster Teilschnitt (T1) des Konturschnitts hergestellt wird, und dass zumindest ein zur Fertigstellung des Konturschnitts verbleibender zweiter Teilschnitt (T2) durch Fortsetzung des ersten Teilschnitts (T1) nachfolgend von der zweiten Laserschneideinrichtung (11) hergestellt wird.

12. Vorrichtung nach einem der Ansprüche 9 bis 11, wobei die Fördervorrichtung (3) korrespondierend zum ersten Bearbeitungsstreifen eine erste Transporteinrichtung (4) und eine in Transportrichtung (T) sich anschließende zweite Transporteinrichtung (5) umfasst, wobei der erste Durchbruch (D1) zwischen einem ersten Ende (E1) der ersten Transporteinrichtung (4) und einem gegenüberliegenden zweiten Ende (E2) der zweiten Transporteinrichtung (5) gebildet ist, und wobei die mitlaufende Bewegung des ersten Durchbruchs (D1) durch eine mittels der ersten Durchbruchbewegungseinrichtung erzeugte gleichsinnigen Bewegung des ersten (E1) und des zweiten Endes (E2) in oder entgegen der Transportrichtung (T) hervorgerufen wird.

13. Vorrichtung nach einem der Ansprüche 9 bis 12, wobei die Fördervorrichtung (3) korrespondierend zum zweiten Bearbeitungsstreifen eine parallel zur ersten Transporteinrichtung (4) angeordnete dritte Transporteinrichtung (6) und eine parallel zur zweiten Transporteinrichtung (5) angeordnete vierte Transporteinrichtung (7) umfasst, wobei der zweite Durchbruch zwischen einem dritten Ende der dritten Transporteinrichtung (6) und einem gegenüberliegenden vierten Ende der vierten Transporteinrichtung (7) gebildet ist, und wobei die mitlaufende Bewegung des zweiten Durchbruchs durch eine mittels der zweiten Durchbruchbewegungseinrichtung erzeugte gleichsinnige Bewegung des dritten und des vierten Endes in oder entgegen der Transportrichtung (T) hervorgerufen wird.

14. Vorrichtung nach einem der Ansprüche 9 bis 13, wobei die Fördervorrichtung (3) korrespondierend zum dritten Bearbeitungsstreifen eine parallel zur dritten Transporteinrichtung (6) angeordnete fünfte Transporteinrichtung (8) und eine parallel zur vierten Transporteinrichtung (7) angeordnete sechste Transporteinrichtung (9) umfasst, wobei der dritte Durchbruch zwischen einem fünften Ende der fünften Transporteinrichtung (8) und einem gegenüberliegenden sechsten Ende der sechsten Transporteinrichtung (9) gebildet ist, und wobei die mitlaufende Bewegung des dritten Durchbruchs durch eine mittels der dritten Durchbruchbewegungseinrichtung erzeugte gleichsinnige Bewegung des fünften und des sechsten Endes in oder entgegen der Transportrichtung (T) erzeugt wird.

15. Vorrichtung nach einem der Ansprüche 9 bis 14, wobei eine Regeleinrichtung zur Regelung der Transportgeschwindigkeit vorgesehen ist.

16. Vorrichtung nach einem der Ansprüche 9 bis 15, wobei eine Verstelleinrichtung zum Verstellen einer das Blechband (BB) aufnehmenden Haspel (1) in einer quer zur Transportrichtung (T) verlaufenden Querrichtung (Q) vorgesehen ist.

17. Vorrichtung nach einem der Ansprüche 9 bis 16, wobei die Verstelleinrichtung eine in der Querrichtung (Q) verstellbare Bandseitenführung umfasst.

18. Vorrichtung nach einem der Ansprüche 9 bis 17, wobei mittels der Verstelleinrichtung eine Querposition des Blechbands (BB) so einstellbar ist, dass der Konturschnitt mit einer minimalen Anzahl an Teilschnitten (T1, T2) herstellbar ist.

19. Vorrichtung nach einem der Ansprüche 9 bis 18, wobei die erste (10), zweite (11) und dritte Laserschneideinrichtung (12) als, vorzugsweise baugleiche, Montageeinheiten ausgestaltet sind.

20. Vorrichtung nach einem der Ansprüche 9 bis 19, wobei die erste (10), zweite (11) und dritte Laserschneideinrichtung (12) bezüglich der Fördervorrichtung (3) schwingungsentkoppelt montiert sind.

21. Vorrichtung nach einem der Ansprüche 9 bis 20, wobei zumindest eine der Montageeinheiten bezüglich der Fördervorrichtung (3) verstellbar gehalten ist.

22. Vorrichtung nach einem der Ansprüche 9 bis 21, wobei im Bereich der Seitenränder der Fördervorrichtung (3) weitere Laserschneideinrichtungen zur Herstellung eines Randbeschnitts des Blechbands vorgesehen sind.

## Claims

1. A method for producing a contour cut in a metal strip (BB) continuously transported by a conveying device (3) in a transport direction (T), having the following steps:
subdivide the metal strip (BB) along the width (B) thereof into at least three overlapping processing strips extending in the transport direction (T), wherein a first processing strip has a first width (B1), a second processing strip has a second width (B2) and a third processing strip has a third width (B3), wherein the first width (B1) and the second width (B2) are both smaller than a width (B) of the metal strip (BB), and wherein the second processing strip extends approximately in the center and overlaps the edges of the first and a third processing strip,
provide a first laser cutting device (10) assigned to the first processing strip, the first working area (A1) of which is limited by the first width (B1) and in the transport direction (T) by a first length (L1),
provide a second laser cutting device (11) assigned to the second processing strip, the second working area (A2) of which - which adjoins the first working area (A1) downstream or upstream - is limited by the second width (B2) and in the transport direction (T) by a second length (L2),
provide a third laser cutting device (12) assigned to the third processing strip, the third working area (A3) of which is limited by the third width (B3) and in the transport direction (T) by a third length (L3), wherein the third working area (A3) of the third laser cutting device (12) is located in a direction perpendicular to the transport direction (T) adjacent to the first working area (A1) of the first laser cutting device, and
control the first laser cutting device (10), the second laser cutting device (11) and the third laser cutting device (12) such that at least one first partial cut (T1) of the contour cut is produced by the upstream laser cutting device (10, 11, 12) and at least one second partial cut (T2) remaining to complete the contour cut is subsequently produced by a continuation of the first partial cut (T1) by the downstream laser cutting device (10, 11).

2. The method according to claim 1, wherein a first breakthrough (D1) provided in the conveying device (3) is moved along in alignment with a first laser beam emitted by the first laser cutting device (10), and so the first laser beam radiates through the first breakthrough (D1), wherein a second breakthrough provided in the conveying device (3) is moved along in alignment with a second laser beam emitted by the second laser cutting device (11), and so the second laser beam radiates through the second breakthrough, and wherein a third breakthrough provided in the conveying device (3) is moved along in alignment with the third laser beam, and so a third laser beam emitted by the third laser cutting device (12) radiates through the third breakthrough.

3. The method according to one of the preceding claims, wherein the conveying device (3) comprises, correspondingly to the first processing strip, a first transport device (4) and a second transport device (5) following in the transport direction (T), wherein the first breakthrough (D1) is formed between a first end (E1) of the first transport device (4) and an opposite second end (E2) of the second transport device (5), and wherein the concurrent movement of the first breakthrough (D1) is generated by a movement, in the same direction, of the first end (E1) and the second end (E2) in the transport direction (T) or opposite thereto.

4. The method according to one of the preceding claims, wherein the conveying device (3) comprises, correspondingly to the second processing strip, a third transport device (6) disposed parallel to the first transport device (4) and a fourth transport device (7) disposed parallel to the second transport device (5), wherein the second breakthrough is formed between a third end of the third transport device (6) and an opposite fourth end of the fourth transport device (7), and wherein the concurrent movement of the second breakthrough is generated by a movement, in the same direction, of the third and the fourth end in the transport direction (T) or opposite thereto.

5. The method according to one of the preceding claims, wherein the conveying device (3) comprises, correspondingly to the third processing strip, a fifth transport device (8) disposed parallel to the third transport device (6) and a sixth transport device (9) disposed parallel to the fourth transport device (7), wherein the third breakthrough is formed between a fifth end of the fifth transport device (8) and an opposite sixth end of the sixth transport device (9), and wherein the concurrent movement of the third breakthrough is generated by a movement, in the same direction, of the fifth and the sixth end in the transport direction (T) or opposite thereto.

6. The method according to one of the preceding claims, wherein the metal strip (BB) is moved in the transport direction (T) at a substantially constant transport speed.

7. The method according to one of the preceding claims, wherein, in the production of the contour cut, a first arch (Bo1) deviating from a predetermined contour of the contour cut is cut at one end of the first partial cut (T1), and wherein the second partial cut (T2) begins before the one end of the first partial cut (T1) and is directed in a second arch (Bo2) extending toward the predetermined contour.

8. The method according to one of the preceding claims, wherein a transverse position of the metal strip (BB) running traverse to the transport direction (T) is adjusted such that the contour cut can be created using a minimum number of partial cuts (T1, T2).

9. A device for producing a contour cut in a metal strip (BB),
comprising a conveying device (3) for continuously transporting the metal strip (BB) in a transport direction (T), wherein the metal strip (BB) is subdivided along the width (B) thereof into at least three overlapping processing strips extending in the transport direction (T), wherein a first processing strip has a first width (B1), a second processing strip has a second width (B2) and a third processing strip has a third width (B3), wherein the first width (B1) and the second width (B2) are both smaller than a width (B) of the metal strip (BB), and wherein the second processing strip extends approximately in the center and overlaps the edges of the first processing strip and a third processing strip having the first width and a third width (B3),
a first laser cutting device (10) assigned to the first processing strip, the first working area (A1) of which is limited by the first width (B1) and in the transport direction (T) by a first length (L1),
a second laser cutting device (11) assigned to the second processing strip, the second working area (A2) of which - which adjoins the first working area (A1) downstream or upstream - is limited by the second width (B2) and in the transport direction (T) by a second length (L2),
a third laser cutting device (12) assigned to the third processing strip, the third working area (A3) of which is limited by the third width (B3) and in the transport direction (T) by a third length (L3), wherein the third working area (A3) of the third laser cutting device (12) is located in a direction perpendicular to the transport direction (T) adjacent to the first working area (A1) of the first laser cutting device and
a control device for controlling the first laser cutting device (10), the second laser cutting device (11) and the third laser cutting device (12) such that at least one first partial cut (T1) of the contour cut is produced by the upstream laser cutting device (10, 11, 12) and at least one second partial cut (T2) remaining to complete the contour cut is subsequently produced by a continuation of the first partial cut (T1) by the downstream laser cutting device (10, 11).

10. The device according to claim 9, wherein a first breakthrough-moving device is provided for the concurrent movement of a first breakthrough (D1) provided in the conveying device (3) in alignment with a first laser beam emitted by the first laser cutting device (10), and so the first laser beam radiates through the first breakthrough (D1), wherein a second breakthrough-moving device is provided for the concurrent movement of a second breakthrough provided in the conveying device (3) in alignment with a second laser beam emitted by the second laser cutting device (11), and so the second laser beam radiates through the second breakthrough, and wherein a third breakthrough-moving device is provided for the concurrent movement of a third breakthrough provided in the conveying device (3) in alignment with the third laser beam, and so a third laser beam emitted by the third laser cutting device (12) radiates through the third breakthrough.

11. The device according to one of the claims 9 or 10, wherein, by way of the control device, the first laser cutting device (10), the second laser cutting device (11) and the third laser cutting device (12) are controlled such that at least one first partial cut (T1) of the contour cut is produced by the upstream laser cutting device (10, 11, 12) and at least one second partial cut (T2) remaining to complete the contour cut is subsequently produced by a continuation of the first partial cut (T1) by the second laser cutting device (11).

12. The device according to one of the claims 9 to 11, wherein the conveying device (3) comprises, correspondingly to the first processing strip, a first transport device (4) and a second transport device (5) following in the transport direction (T), wherein the first breakthrough (D1) is formed between a first end (E1) of the first transport device (4) and an opposite second end (E2) of the second transport device (5), and wherein the concurrent movement of the first breakthrough (D1) is caused by a movement, in the same direction, of the first (E1) and the second end (E2) in the transport direction (T) or opposite thereto, said movement being caused by the first breakthrough-moving device.

13. The device according to one of the claims 9 to 12, wherein the conveying device (3) comprises, correspondingly to the second processing strip, a third transport device (6) disposed parallel to the first transport device (4) and a fourth transport device (7) disposed parallel to the second transport device (5), wherein the second breakthrough is formed between a third end of the third transport device (6) and an opposite fourth end of the fourth transport device (7), and wherein the concurrent movement of the second breakthrough is caused by a movement, in the same direction, of the third and the fourth end in the transport direction (T) or opposite thereto, said movement being caused by the second breakthrough-moving device.

14. The device according to one of the claims 9 to 13, wherein the conveying device (3) comprises, correspondingly to the third processing strip, a fifth transport device (8) disposed parallel to the third transport device (6) and a sixth transport device (9) disposed parallel to the fourth transport device (7), wherein the third breakthrough is formed between a fifth end of the fifth transport device (8) and an opposite sixth end of the sixth transport device (9), and wherein the concurrent movement of the third breakthrough is caused by a movement, in the same direction, of the fifth and the sixth end in the transport direction (T) or opposite thereto, said movement being caused by the third breakthrough-moving device.

15. The device according to one of the claims 9 to 14, wherein a control device is provided for controlling the transport speed.

16. The device according to one of the claims 9 to 15, wherein an adjusting device is provided for adjusting a reel (1) accommodating the metal strip (BB) in a transverse direction (Q) running traverse to the transport direction (T).

17. The device according to one of the claims 9 to 16, wherein the adjusting device comprises a strip lateral guide adjustable in the transverse direction (Q).

18. The device according to one of claims 9 to 17, wherein a transverse position of the metal strip (BB) can be adjusted by way of the adjusting device such that the contour cut can be created using a minimum number of partial cuts (T1, T2).

19. The device according to one of the claims 9 to 18, wherein the first (10), second (11) and third laser cutting device (12) are in the form of installation units preferably having the same design.

20. The device according to one of the claims 9 to 19, wherein the first laser cutting device (10), the second laser cutting device (11) and the third laser cutting device are installed in a vibration-decoupled manner in relation to the conveying device (3).

21. The device according to one of the claims 9 to 20, wherein at least one of the installation units is retained in a manner such that it is adjustable with respect to the conveying device (3).

22. The device according to one of the claims 9 to 21, wherein further laser cutting devices for producing an edge cut of the metal strip are provided in the region of the lateral edges of the conveying device (3).

## Revendications

1. Procédé pour la réalisation d'une découpe de contour dans une bande de tôle (BB) transportée continuellement dans un sens de transport (T) au moyen d'un convoyeur (3) selon les étapes suivantes:
division de la bande de tôle (BB) par rapport à sa largeur (B) en au moins trois bandes d'usinage chevauchantes s'étendant dans le sens de transport (T), une première bande d'usinage présentant une première largeur (B1), une deuxième bande d'usinage une deuxième largeur (B2) et une troisième bande d'usinage une troisième largeur (B3), la première (B1) et la deuxième largeur (B2) étant respectivement inférieures à une largeur (B) de la bande de tôle (BB), et où la deuxième bande d'usinage s'étend approximativement au centre et recouvre au bord la première et une troisième bande d'usinage,
mise à disposition d'un premier dispositif de découpe au laser (10) affecté à la première bande d'usinage, dont la première plage d'opération (A1) est limitée par la première largeur (B1) et, dans le sens de transport (T), par une première longueur (L1),
mise à disposition d'un deuxième dispositif de découpe au laser (11) affecté à la deuxième bande d'usinage, dont la deuxième plage d'opération (A2) suivante en aval ou en amont de la première plage d'opération (A1) est limitée par la deuxième largeur (B2) et, dans le sens de transport (T), par une deuxième longueur (L2),
mise à disposition d'un troisième dispositif de découpe au laser (12) affecté à la troisième bande d'usinage, dont la troisième plage d'opération (A3) est limitée par la troisième largeur (B3) et, dans le sens de transport (T), par une troisième longueur (L3), la troisième plage d'opération (A3) du troisième dispositif de découpe au laser (12) se trouvant dans un sens vertical par rapport au sens de transport (T), près de la première plage d'opération (A1) du premier dispositif de découpe au laser, et
commande du premier (10), deuxième (11) et troisième dispositif de découpe au laser (12) de façon à ce qu'au moins une première coupe partielle (T1) de la découpe de contour soit réalisée au moyen du dispositif de découpe au laser (10, 11, 12) situé en amont, et qu'au moins une deuxième coupe partielle (T2) restante pour la réalisation de la découpe de contour soit réalisée par suite de la première coupe partielle (T1) puis par le dispositif de découpe au laser (10, 11) situé en aval.

2. Procédé selon la revendication 1, où une première ouverture (D1) prévue sur le convoyeur (3) est déplacée dans la même direction en alignement sur un premier faisceau laser diffusé par le premier dispositif de découpe au laser (10), afin que le premier faisceau laser traverse la première ouverture (D1), où une deuxième ouverture prévue sur le convoyeur (3) est déplacée dans la même direction en alignement sur un deuxième faisceau laser diffusé par le deuxième dispositif de découpe au laser (11), afin que le deuxième faisceau laser traverse la deuxième ouverture, et où une troisième ouverture prévue sur le convoyeur (3) est déplacée dans la même direction en alignement sur le troisième faisceau laser, afin qu'un troisième faisceau laser diffusé par le troisième dispositif de découpe au laser (12) traverse la troisième ouverture.

3. Procédé selon l'une des revendications précédentes, où le convoyeur (3) comprend, correspondant à la première bande d'usinage, un premier dispositif de transport (4) et un deuxième dispositif de transport (5) suivant dans le sens de transport (T), où la première ouverture (D1) est réalisée entre une première extrémité (E1) du premier dispositif de transport (4) et une deuxième extrémité (E2) opposée du deuxième dispositif de transport (5), et où le déplacement dans la même direction de la première ouverture (D1) est généré par un déplacement de même sens de la première (E1) et de la deuxième extrémité (E2) dans ou opposé au sens de transport (T).

4. Procédé selon l'une des revendications précédentes, où le convoyeur (3) comprend, correspondant à la deuxième bande d'usinage, un troisième dispositif de transport (6) disposé parallèlement au premier dispositif de transport (4) et un quatrième dispositif de transport (7) disposé parallèlement au deuxième dispositif de transport (5), où la deuxième ouverture est réalisée entre une troisième extrémité du troisième dispositif de transport (6) et une quatrième extrémité opposée du quatrième dispositif de transport (7), et où le déplacement dans la même direction de la deuxième ouverture est généré par un déplacement de même sens de la troisième et de la quatrième extrémité dans ou opposé au sens de transport (T).

5. Procédé selon l'une des revendications précédentes, où le convoyeur (3) comprend, correspondant à la troisième bande d'usinage, un cinquième dispositif de transport (8) disposé parallèlement au troisième dispositif de transport (6) et un sixième dispositif de transport (9) disposé parallèlement au quatrième dispositif de transport (7), où la troisième ouverture est réalisée entre une cinquième extrémité du cinquième dispositif de transport (8) et une sixième extrémité opposée du sixième dispositif de transport (9), et où le déplacement dans la même direction de la troisième ouverture est généré par un déplacement de même sens de la cinquième et de la sixième extrémité dans ou opposé au sens de transport (T).

6. Procédé selon l'une des revendications précédentes, où la bande de tôle (BB) est déplacée à une vitesse de transport essentiellement constante dans le sens de transport (T).

7. Procédé selon l'une des revendications précédentes où, lors de la réalisation de la découpe de contour, une première courbe (Bo1) différente du contour défini de la découpe de contour est découpée à une extrémité de la première coupe partielle (T1), et où la deuxième coupe partielle (T2) commence avant l'une des extrémités de la première coupe partielle (T1) et est guidée dans une deuxième courbe (Bo2) arrivant sur le contour défini.

8. Procédé selon l'une des revendications précédentes, où une position transversale de la bande de tôle (BB) allant vers le sens de transport (T) est définie de façon à ce que la découpe de contour soit réalisable avec un nombre minimal de coupes partielles (T1, T2).

9. Dispositif pour la réalisation d'une découpe de contour dans une bande de tôle (BB),
avec un convoyeur (3) pour le transport continu de la bande de tôle (BB) dans un sens de transport (T), où la bande de tôle (BB) est divisée par rapport à sa largeur (B) en au moins trois bandes d'usinage chevauchantes s'étendant dans le sens de transport (T), où une première bande d'usinage présente une première largeur (B1), une deuxième bande d'usinage une deuxième largeur (B2) et une troisième bande d'usinage une troisième largeur (B3), où la première (B1) et la deuxième largeur (B2) sont respectivement inférieures à une largeur (B) de la bande de tôle (BB), et où la deuxième bande d'usinage s'étend approximativement au centre et recouvre au bord la première et une troisième bande d'usinage présentant une troisième largeur (B3),
un premier dispositif de découpe au laser (10) affecté à la première bande d'usinage, dont la première plage d'opération (A1) est limitée par la première largeur (B1) et, dans le sens de transport (T), par une première longueur (L1),
un deuxième dispositif de découpe au laser (11) affecté à la deuxième bande d'usinage, dont la deuxième plage d'opération (A2) suivante en aval ou en amont de la première plage d'opération (A1) est limitée par la deuxième largeur (B2) et, dans le sens de transport (T), par une deuxième longueur (L2),
un troisième dispositif de découpe au laser (12) affecté à la troisième bande d'usinage, dont la troisième plage d'opération (A3) est limitée par la troisième largeur (B3) et, dans le sens de transport (T), par une troisième longueur (L3), la troisième plage d'opération (A3) du troisième dispositif de découpe au laser (12) se trouvant dans un sens vertical par rapport au sens de transport (T), près de la première plage d'opération (A1) du premier dispositif de découpe au laser et
un dispositif de commande pour commander le premier (10), le deuxième (11) et le troisième dispositif de découpe au laser (12) de façon à ce qu'au moins une première coupe partielle (T1) de la découpe de contour soit réalisée au moyen du dispositif de découpe au laser (10, 11, 12) situé en amont, et qu'au moins une deuxième coupe partielle (T2) restante pour la réalisation de la découpe de contour soit réalisée par suite de la première coupe partielle (T1) puis par le dispositif de découpe au laser (10, 11) situé en aval.

10. Dispositif selon la revendication 9, où un premier dispositif de déplacement d'ouverture est prévu pour le déplacement dans la même direction d'une première ouverture (D1) prévue sur le convoyeur (3) en alignement sur un premier faisceau laser diffusé par le premier dispositif de découpe au laser (10), afin que le premier faisceau laser traverse la première ouverture (D1), où un deuxième dispositif de déplacement d'ouverture est prévu pour le déplacement dans la même direction d'une deuxième ouverture prévue sur le convoyeur (3) en alignement sur un deuxième faisceau laser diffusé par le deuxième dispositif de découpe au laser (11), afin que le deuxième faisceau laser traverse la deuxième ouverture, et où un troisième dispositif de déplacement d'ouverture est prévu pour le déplacement dans la même direction d'une troisième ouverture prévue sur le convoyeur (3) en alignement sur le troisième faisceau laser, afin qu'un troisième faisceau laser diffusé par le troisième dispositif de découpe au laser (12) traverse la troisième ouverture.

11. Dispositif selon l'une des revendications 9 ou 10, où le premier (10), le deuxième (11) et le troisième dispositif de découpe au laser (12) sont commandés au moyen du dispositif de commande de façon à ce qu'au moins une première coupe partielle (T1) de la découpe de contour soit réalisée avec un dispositif de découpe au laser (10, 11, 12) situé en amont, et qu'au moins une deuxième coupe partielle (T2) restante pour la réalisation de la découpe de contour soit réalisée par suite de la première coupe partielle (T1) puis par le deuxième dispositif de découpe au laser (11).

12. Dispositif selon l'une des revendications 9 à 11, où le convoyeur (3) comprend, correspondant à la première bande d'usinage, un premier dispositif de transport (4) et un deuxième dispositif de transport (5) suivant dans le sens de transport (T), où la première ouverture (D1) est réalisée entre une première extrémité (E1) du premier dispositif de transport (4) et une deuxième extrémité (E2) opposée du deuxième dispositif de transport (5), et où le déplacement dans la même direction de la première ouverture (D1) est provoqué par un déplacement de même sens, généré au moyen du premier dispositif de déplacement d'ouverture, de la première (E1) et de la deuxième extrémité (E2) dans ou opposé au sens de transport (T).

13. Dispositif selon l'une des revendications 9 à 12, où le convoyeur (3) comprend, correspondant à la deuxième bande d'usinage, un troisième dispositif de transport (6) disposé parallèlement au premier dispositif de transport (4) et un quatrième dispositif de transport (7) disposé parallèlement au deuxième dispositif de transport (5), où la deuxième ouverture est réalisée entre une troisième extrémité du troisième dispositif de transport (6) et une quatrième extrémité opposée du quatrième dispositif de transport (7), et où le déplacement dans la même direction de la deuxième ouverture est provoqué par un déplacement de même sens, généré au moyen du deuxième dispositif de déplacement d'ouverture, de la troisième et de la quatrième extrémité dans ou opposé au sens de transport (T).

14. Dispositif selon l'une des revendications 9 à 13, où le convoyeur (3) comprend, correspondant à la troisième bande d'usinage, un cinquième dispositif de transport (8) disposé parallèlement au troisième dispositif de transport (6) et un sixième dispositif de transport (9) disposé parallèlement au quatrième dispositif de transport (7), où la troisième ouverture est réalisée entre une cinquième extrémité du cinquième dispositif de transport (8) et une sixième extrémité opposée du sixième dispositif de transport (9), et où le déplacement dans la même direction de la troisième ouverture est généré par un déplacement de même sens, généré au moyen du troisième dispositif de déplacement d'ouverture, de la cinquième et de la sixième extrémité dans ou opposé au sens de transport (T).

15. Dispositif selon l'une des revendications 9 à 14, où un dispositif de réglage est prévu pour le réglage de la vitesse de transport.

16. Dispositif selon l'une des revendications 9 à 15, où un dispositif d'ajustage est prévu pour l'ajustage d'un dérouleur (1) recevant la bande de tôle (BB) dans un sens transversal (Q) par rapport au sens de transport (T).

17. Dispositif selon l'une des revendications 9 à 16, où le dispositif d'ajustage comprend un guidage latéral de bande réglable dans le sens transversal (Q).

18. Dispositif selon l'une des revendications 9 à 17, où une position transversale de la bande de tôle (BB) est ajustable au moyen du dispositif d'ajustage de façon à ce que la découpe de contour soit réalisable avec un nombre minimal de coupes partielles (T1, T2).

19. Dispositif selon l'une des revendications 9 à 18, où le premier (10), le deuxième (11) et le troisième dispositif de découpe au laser (12) sont réalisés comme unités de montage, de préférence de type identique.

20. Dispositif selon l'une des revendications 9 à 19, où le premier (10), le deuxième (11) et le troisième dispositif de découpe au laser (12) sont montés de manière antivibratoire par rapport au convoyeur (3).

21. Dispositif selon l'une des revendications 9 à 20, où au moins une des unités de montage est maintenue ajustable par rapport au convoyeur (3).

22. Dispositif selon l'une des revendications 9 à 21, où d'autres dispositifs de découpe au laser sont prévus dans la zone des bords latéraux du convoyeur (3) pour la réalisation d'une coupe des bords de la bande de tôle.
